# EUROPEAN PATENT SPECIFICATION

(11) **EP 4 007 389 B1**
(45) Date of publication and mention of the grant of the patent: **05.11.2025**
(21) Application number: 20848681.1
(22) Date of filing: 16.07.2020
(51) Int. Cl.: H04W 60/00, H04W 48/16, H04L 12/66, H04L 9/40, H04W 12/06, H04W 8/20, H04W 60/04, H04W 88/06

(54) **METHOD FOR IMPLEMENTING 5G USER REGISTRATION, NETWORK ELEMENT APPARATUS, AND STORAGE MEDIUM**
VERFAHREN ZUR IMPLEMENTIERUNG EINER 5G-BENUTZERREGISTRIERUNG, NETZWERKELEMENTVORRICHTUNG UND SPEICHERMEDIUM
PROCÉDÉ DE MISE EN EN OEUVRE DE L'ENREGISTREMENT D'UN UTILISATEUR DE 5G, APPAREIL D'ÉLÉMENT DE RÉSEAU ET SUPPORT D'ENREGISTREMENT

(30) Priority: 31.07.2019 CN 201910714746
(43) Date of publication of application: 01.06.2022
(73) Proprietor: ZTE Corporation, Shenzhen, Guangdong 518057 (CN)
(72) Inventor: SONG, Xueyan, Shenzhen, Guangdong 518057 (CN); CHEN, Yong, Shenzhen, Guangdong 518057 (CN)
(74) Representative: Zoli, Filippo
(86) International application number: PCT/CN2020/102322
(87) International publication number: WO 2021/017849

(56) References cited:
- WO-A1-2018/192528
- CN-A- 104 301 336
- CN-A- 107 579 872
- CN-A- 111 093 262
- BBF: "Response to 3GPP SA2 liaison S2-1811575 on 'general status of work'", vol. SA WG5, no. Montreal,Canada; 20190121 - 20190125, 14 January 2019 (2019-01-14), XP051590779, Retrieved from the Internet <URL:http://www.3gpp.org/ftp/tsg%5Fsa/WG5%5FTM/TSGS5%5F123/Docs/S5%2D191283%2Ezip> [retrieved on 20190114]
- BROADBAND FORUM: "REVISION 3 contrib-20838 SD-420 R3 5G Fixed Mobile Convergence Study", 18 January 2019 (2019-01-18), XP051611311, Retrieved from the Internet <URL:http://www.3gpp.org/ftp/tsg%5Fsa/WG3%5FSecurity/TSGS3%5F94%5FKochi/Docs/S3%2D190029%2Ezip> [retrieved on 20190118]
- BBF: "Response to 3GPP SA2 liaison S2-1811575 on ‘general status of work", 3GPP TSG-SA5 MEETING #123 S5-191283, 14 January 2019 (2019-01-14), XP051590779
- BBF: ""Response to 3GPP SA2 liaison S2-1811575 on 'general status of work'"", 3GPP TSG-SA5 MEETING #123 S5-191283, 14 January 2019 (2019-01-14), XP051590779

## Description

### TECHNICAL FIELD

The present disclosure relates to the field of communications, and in particular to methods for implementing 5G user registration and a computer-readable storage medium.

### BACKGROUND

The Broadband Forum (BBF) and the 3rd Generation Partnership Project (3GPP) of the International Standards Organization have carried out standardization cooperation in the field of Fixed-Mobile Convergence (FMC). With the progress of the standardization, the related functions of fixed communication network are mainly developed in BBF, while the required functions of mobile communication network are developed in 3GPP. The purpose of this standardization is to realize the deep integration of fixed communication network and mobile communication network in network structure and service level, and to realize the unified communication to the 5G core network through the complete decoupling of the access network and core network.

However, for the fixed-mobile convergence network architecture, there are differences between the conventional residential gateway FN-RG and the upgraded residential gateway 5G-RG. It's important to register 5G users based on the conventional residential gateway FN-RG and complete the communication with the 5G core network.

Document "REVISION 3 contrib-20838 SD-420 R3 5G Fixed Mobile Convergence Study" describes the FMIF-CP sends a registration request to the AMF of the 5GC on behalf of the FN-RG and involves the interaction process between the FMIF and AMF.

### SUMMARY

Several embodiments of the present disclosure provide methods for implementing 5G user registration and a computer-readable storage medium.

The features of the methods and storage medium according to embodiments of the present disclosure are set out in the appended set of claims.

With regard to the above embodiments and other aspects of the present disclosure and the implementations thereof, further explanations are provided in the drawings, detailed description and appended claims.

### BRIEF DESCRIPTION OF DRAWINGS

Fig. 1 is a first schematic flowchart of a method for implementing 5G user registration according to an embodiment of the present disclosure;
Fig. 2 is a second schematic flowchart of a method for implementing 5G user registration according to an embodiment of the present disclosure;
Fig. 3 is a schematic diagram of inter-working between a wired access network and a wireless core network according to an embodiment of the present disclosure;
Fig. 4 is a schematic diagram of service registration information notification from FN-RG to FMIF-C according to an embodiment of the present disclosure;
Fig. 5 is a schematic diagram of collecting NS information from FN-RG by 5G FMIF-C according to an embodiment of the present disclosure;
Fig. 6 is a schematic diagram of slice subscription authentication from 5G FMIF-C to 5G core network according to an embodiment of the present disclosure;
Fig. 7 is a schematic diagram of the implementation of NS policy mapping binding from the wireless core side to the wired access side by 5G FMIF-C according to an embodiment of the present disclosure;
Fig. 8 is a schematic diagram of service registration information notification from FN- RG to Destination Network (DNN) according to an embodiment of the present disclosure;
Fig. 9 is a schematic diagram of judging and processing a received PPPoE Active Discovery Initiation (PADI) message by BNG according to an embodiment of the present disclosure;
Fig. 10 is a schematic diagram of a PPPoE PADI message carrying encapsulated TAG information according to an embodiment of the present disclosure;
Fig. 11 is a first block diagram of a network element device according to an embodiment of the present disclosure; and
Fig. 12 is a first schematic diagram of a hardware structure of the network element device according to an embodiment of the present disclosure.

### DETAILED DESCRIPTION

In order to make the purposes, technical schemes and advantages of the present disclosure clear, the embodiments of the present disclosure will be described hereinafter in detail with reference to the accompanying drawings. It should be noted that any combinations of embodiments and features of the embodiments of the present disclosure without conflict are possible.

In existing technologies, for the technical field of the integration of wired fixed access network and wireless core network, the deep integration of fixed communication network and mobile communication network in network structure and service level is realized. By completely decoupling the access network from the core network, the unified communication of various types of access networks to the 5G core network is realized through unified outbound interfaces (N1, N2, N3).

There are several scenarios for the fixed-mobile convergence network architecture, mainly including the support for the conventional Fixed Network-Residential Gateway (FN-RG), and the support for the upgraded 5th Generation-Residential Gateway (5G-RG). In both scenarios, from the perspective of network evolution, the support for FN-RG is easy to realize, and the support for 5G-RG may be more concerned with the wired access network connecting to the newly-built network, and RG can be directly upgraded to 5G-RG. The differences in processing between the conventional residential gateway FN-RG and the upgraded 5G-RG residential gateway are mainly as follows. The 5G-RG extension supports N1 interface, which can realize direct communication with the 5G core network. The FN-RG is a conventional device, which does not support N1 interface, that is, it does not support direct communication with the 5G core network. The FN-RG may communicate with the 5G core network by a proxy through an inter-working device, Fixed-Mobile Inter-working Function (5G FMIF), or 5G Access Gateway Function (5G AGF). The inter-working device is the device for inter-working between the wired access network and the wireless core network.

For conventional FN-RG, how does 5G FMIF or 5G AGF determine whether FN-RG has a 5G service requirement? How does FN-RG find the corresponding 5G FMIF-C or 5G AGF-C, and how does 5G FMIF-C or 5G AGF-C collect AN parameter information, encapsulate the user registration information of proxy FN-RG, and realize the registration and authentication of user information to 5G core network? The embodiments of the present disclosure realizes a communication with the 5G core network through FN-RG, wired access network and 5G FMIF supporting N1, N2 and N3 interfaces. During the communication process, after FN-RG sends out 5G new service requirements, 5G FMIF-C responds and processes FN-RG registration information.

Although the wired access network does not support the 5G function, the embodiments of the present disclosure can realize the proxy of user registration authentication for FN-RG through the inter-working device 5G FMIF between the wired access network and the wireless core network, and complete the encapsulation of user registration information through the collection of user registration information by 5G FMIF. Furthermore, the embodiments of the present disclosure can also segment and refine the services with 5G service requirements to realize the identification of FN-RG service requirements. The embodiment of the present disclosure can also be applied to the fixed-mobile convergence network, including the extension of slicing function by wired access network, and the device architecture of 5G FMIF in this process, etc.

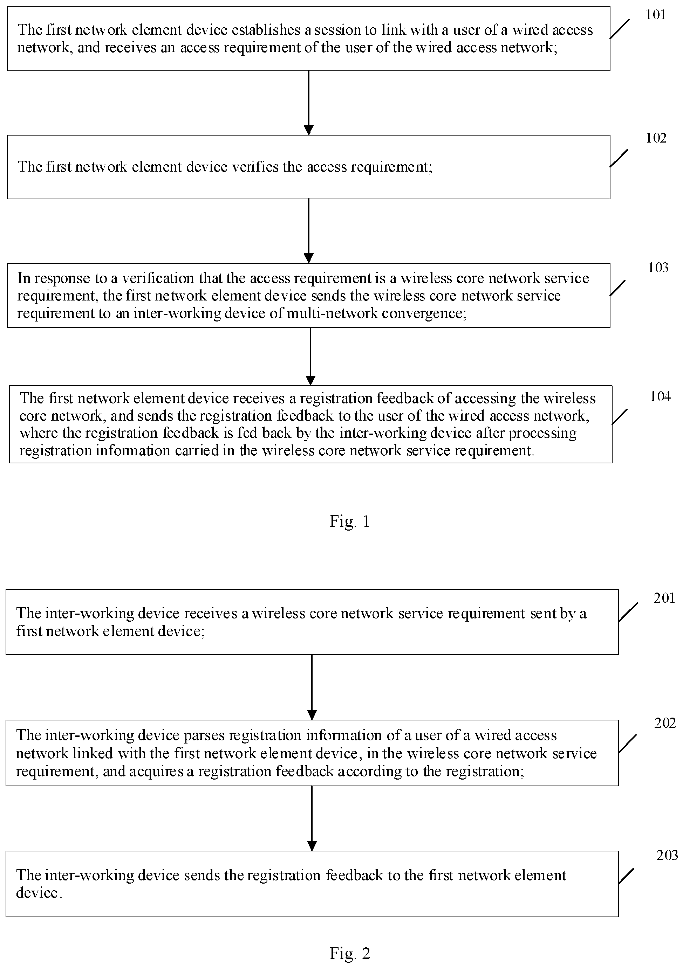

Fig. 1 is a first flowchart of a method for wireless communication transmission according to an embodiment of the present disclosure. As shown in Fig. 1, the method is applied to a first network element device which realizes wired access and convergence to the wireless core network, and includes the following steps.

At step 101, a first network element device receives an access requirement of a user of a wired access network after establishing a session for linking with the user of the wired access network.

At step 102, the first network element device verifies the access requirement.

At step 103, the first network element device sends a wireless core network service requirement to an inter-working device of multi-network convergence, in response to a verification that the access requirement is the wireless core network service requirement.

At step 104, the first network element device receives a registration feedback of accessing the wireless core network, and sends the registration feedback to the user of the wired access network, where the registration feedback is fed back by the inter-working device after processing registration information carried in the wireless core network service requirement.

According to an embodiment, the access network of the wired access network and the access network of the wireless core network are managed by different operators or the same operator.

It should be noted that, with respect to the notification of a new service requirement of 5G, the embodiments of the present disclosure can be realized through a PPPoE session or an IPoE session. The user subscription information acquisition process of 5G FMIF-C can be realized through a PPPoE session or an IPoE session. A difference between the PPPoE session and the IPoE session lies in that, PPPoE or IPoE is adopted according to various acquisition and encapsulation formats of Line ID information. The following describes the use of PPPoE to dial-up the Internet for users.

In an implementation, the first network element device sending a wireless core network service requirement to an inter-working device of multi-network convergence, in response to a verification that the access requirement is the wireless core network service requirement, includes: the first network element device sends the wireless core network service requirement to the inter-working device through a Point-to-Point Protocol over Ethernet (PPPoE) session or an Internet Protocol over Ethernet (IPoE) session.

In an implementation, the first network element device receiving a registration feedback of accessing the wireless core network, and sending the registration feedback to the user of the wired access network, includes: the first network element device receives a registration feedback of accessing the wireless core network through a PPPoE session or an IPoE session, and sends the registration feedback to the user of the wired access network.

In an implementation, when the access requirement of the user of the wired access network is encapsulated by a PADI message, a service requested by the user of the wired access network carried in the PADI message is identified by a TAG type of a service name.

In an implementation, the PADI message further carries respective service slice types corresponding to various wireless core network services, and the respective service slice types are distinguished by various numerical values.

Service slice types include at least one selected from Internet Protocol Television (IPTV) type, Hyper Service Internet (HSI) type and 5G value-added service type.

According to an implementation, the PADI message further carries TAG information of a local identifier Line ID of a wired access W-AN node.

According to an implementation, the first network element device verifying the access requirement, includes: when the access requirement is encapsulated by the PADI message, if it is parsed that the TAG type corresponding to the service requested by the user of the wired access network carried in the PADI message is 5G type, a PPPoE Active Discovery Request (PADR) message is returned to the user of the wired access network in order to trigger an access of the wired access network to the wireless core network.

The PADR message carries at least a same service name as that carried in the PADI message.

In an implementation, the first network element device sending a wireless core network service requirement to an inter-working device of multi-network convergence, in response to a verification that the access requirement is the wireless core network service requirement, includes: the first network element device sends the PADI message to the inter-working device; the PADI message carries a TAG type of a 5G service requirement.

In an implementation, the first network element device sends the PADI message to the inter-working device, includes: adding a local Non-Access-Stratum (NAS) _ IP identifier of the first network element device into the PADI message, and generating user subscription information of the user of the wired access network; and sending the PADI message carrying the user subscription information to the inter-working device.

Fig. 2 is a second schematic flowchart of a method for implementing 5G user registration according to an embodiment of the present disclosure, the method is applied to inter-working device for realizing multi-network convergence, and includes the following steps.

At step 201, an inter-working device receives a wireless core network service requirement sent by a first network element device.

At step 202, the inter-working device parses registration information of a user of a wired access network linked with the first network element device, in the wireless core network service requirement, and acquires a registration feedback according to the registration information.

At step 203, the inter-working device sends the registration feedback to the first network element device.

According to an implementation, when the wireless core network service requirement received by the inter-working device is encapsulated by a PADI message, the PADI message carries at least one selected from:
- a service requested by the user of the wired access network, which is identified by a TAG type of a service name;
- respective service slice types corresponding to various wireless core network services, where the respective service slice types are distinguished by various numerical values;
- TAG information of a local identifier Line ID of a wired access W-AN node;
- a local NAS_IP identifier of the first network element device.

According to an implementation, the service slice types include at least one selected from IPTV type, HSI type and 5G value-added service type.

According to an implementation, the inter-working device parsing registration information of a user of a wired access network linked with the first network element device, in the wireless core network service requirement, and acquiring a registration feedback according to the registration information, includes: when the inter-working device parses that the registration information is user subscription information of the PADI message, the inter-working device acquires a TAG type of a 5G service requirement and the corresponding service slice type carried in the PADI message according to the user subscription information; the inter-working device realizes a user registration to the wireless core network according to the TAG type of the 5G service requirement and the corresponding service slice type, and acquires the registration feedback.

According to an implementation, the inter-working device realizing a user registration to the 5G core network according to the TAG type of the 5G service requirement and the corresponding service slice type, and acquiring the registration feedback, includes: the inter-working device performs NS slice subscription authentication to the wireless core network according to the TAG type of the 5G service requirement and the corresponding service slice type, and acquires a NS slicing strategy; the inter-working device stores the NS slicing strategy locally and synchronizes the NS slicing strategy to the wired access network, to realize a binding of a wired access network slicing strategy and a wireless core network slicing strategy.

According to an implementation, after the binding of the wired access network slicing strategy and the wireless core network slicing strategy is realized, the method further includes: according to the binding of the wired access network slicing strategy and the wireless core network slicing strategy, generating a mapping table from the wireless core network slicing strategy to the wired access network slicing strategy.

According to an implementation, after the binding of the wired access network slicing strategy and the wireless core network slicing strategy is realized, the method further includes: the inter-working device receives network slice subscription information from the wireless core network; looks up the mapping table, and maps slice information in the network slice subscription information to a slice type which can be parsed by the wired access network.

According to an implementation, the inter-working device sends the registration feedback to the first network element, includes: acquiring the registration feedback according to the slice information of the slice type which can be parsed by the wired access network; sending the registration feedback to the first network element device through a PADO message.

In some scenario applications, the embodiments of the present disclosure can be applied to a scenario that a wired access network and a wireless core network are managed by different operators, or by the same operator. The Broadband Network Gateway (BNG) device of the original wired access network is reserved, and PPPoE or IPoE of FN-RG establishes a session link with BNG, and then BNG completes the verification of various access requirements of users. The reason for reserving BNG is that, if the user access requirement is the original conventional wired access network service requirement, BNG can continue to process according to the conventional wired access network service process, and at the same time, the registration information of the wired access network access user is still stored in the Authentication, Authorization, Accounting (AAA) and Broadband Policy Control Function (BPCF) devices provided by BNG, without a need to migrate the subscription information. If the user access requirement is a 5G new service requirement, BNG re-encapsulates the service message by parsing the service message, in order to complete the transmission to 5G FMIF (as an inter-working device between the wired access network and the wireless core network), and then the 5G FMIF completes the proxy encapsulation processing of the user registration information of FN-RG.

### Examples of applications:

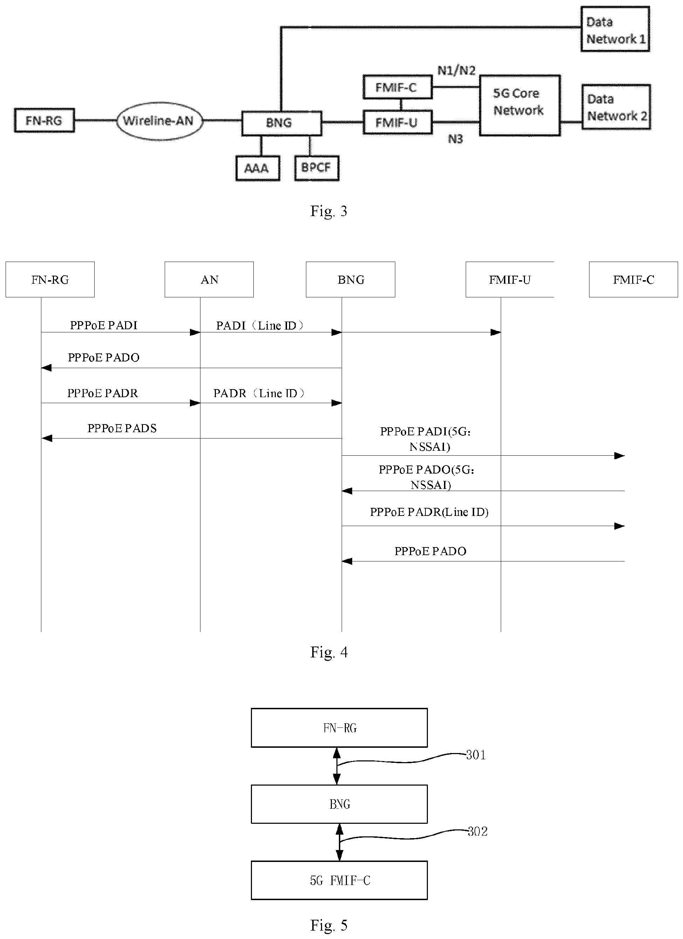

Fig. 3 is the first schematic diagram of inter-working between the wired access network and wireless core network. As shown in Fig. 3, when the wired access network and 5G core network are managed by different operators, a 5G Wireline Wireless Convergence (5WWC) reference architecture can be realized.

Fig. 4 is the first schematic diagram of notification of service registration information from FN-RG to FMIF-C according to an embodiment of the present disclosure. As shown in Fig. 4, a notification of a new service requirement of 5G from FN-RG to 5G FMIF-C, and an acquisition process of user subscription information of 5G FMIF-C can be realized. Table one shows standardized slicing services/type values defined by 3GPP. Table two shows SD service differentiation processing values defined in the present disclosure.

**Table one**

| **SST** | **SST value** | **Feature** |
|---|---|---|
| eMBB | 1 | Suitable for slice processing of enhanced mobile broadband (eMBB) |
| URLLC | 2 | Suitable for slice processing of ultra-high reliability and low latency communication (URLLC) |
| MIoT | 3 | Suitable for slicing processing of Maximum Internet of Things (MIoT) |

**Table two**

| **SD** | **SD value** | **Feature** |
|---|---|---|
| HSI | 1 | Suitable for slicing processing of a broadband internet service requirement, when SST=1 |
| IPTV | 2 | Suitable for slicing processing of an IPTV service requirement, when SST=1 |
| VoIP | 3 | Suitable for slicing processing of a Voice over Internet Phone (VoIP) service requirement, when SST=1 |

A network reference architecture corresponding to a scenario according to an embodiment of the present disclosure is shown in Fig. 3. FN-RG accesses the wired access network (Wireline-AN). Because the wired access network and the 5G core network may be managed by different operators, the BNG device of the original wired access network may be reserved, which can be used for the inheritance of the access service of the conventional wired access network and the intercommunication with the cross-operator-managed 5G core network. Since BNG cannot be directly upgraded to have the functions of N1, N2 and N3 interfaces required for inter-working with the 5G core network, it is necessary to add a 5G FMIF inter-working device, which is a virtual network function device, that is, 5G FMIF Virtual Network Function (VNF). 5G FMIF VNF is a structure in which the control plane is separated from the user plane, and the control plane 5G FMIF-C of 5G FMIF VNF supports N1 interface and N2 interface, where the N1 interface is the user registration proxy of FN-RG, and the N2 interface is deployed between 5G FMIF-C and 5GC Access and Mobility Management Function (AMF) to realize NAS information transfer and user registration authentication for users. The user plane of 5G FMIF VNF is 5G FMIF-U, which supports the N3 interface and is deployed between 5G FMIF-U and UPF of 5GC to realize the data transmission of the user plane.

Fig. 4 shows a notification of a 5G new service requirement from FN-RG to 5G FMIF-C, and an acquisition process of user subscription information of 5G FMIF-C, during the subscription process from FN-RG to 5G FMIF-C. The process of the notification of the 5G new service requirement from FN-RG to 5G FMIF-C, and the acquisition process of the user subscription information of 5G FMIF-C, can be realized through a PPPoE session or IPoE session. Taking PPPoE as an example, the present disclosure shows how FN-RG sends a 5G new service requirement from FN-RG to 5G FMIF-C through BNG after establishing a PPPoE session with BNG, and completes registration and authentication of the new service requirement for a user, including the following operations.

At step 1, FN-RG sends a PPPoE PADI message, where the PADI data packet contain a TAG of a Service-Name to indicate a service requested by a host. The FN-RG may carry a TAG type when initiating a 5G service request, where a 5G type is recommended in the present disclosure.

According to an implementation, FN-RG extracts various numerical values to represent respective service slice types according to various 5G service types, which can be used to extract Network Slice Selection Assistance Information (NSSAI) parameters of a 5G core network. Slice types may include an Internet Protocol Television (IPTV) type, a Hyper Service Internet (HSI) type and a 5G value-added service type, such as Internet of Things (IoT), etc.

According to an implementation, after receiving the PPPoE PADI message sent by the FN-RG, the Wireline-Access Network (W-AN) node adds the TAG information of the local Line ID to the PPPoE message, encapsulate it into the PADI message and send to BNG. The encapsulation format of the Line ID information of PPPoE may refer to the encapsulation format of PPPoE Tag Circuit ID and Remote ID message in TR-101i2 Appendix.

According to an implementation, the W-AN node has the ability to encapsulate and process PPPoE discovery messages, and the ability of carrying the TAG information of Line ID and sending to BNG.

At step 2, after receiving the PADI sent by W-AN, the BNG device parses the PPPoE discovery message and responds with a PPPoE Active Discovery Offer (PADO). The PADO data packet contains the same Service-Name as that in the PADI, and any number of Service-Name Tags indicate other services that the accessed BNG device can provide.

According to an implementation, the BNG device is able to parse the Service-Name Tag in the PADI message. If the BNG device does not support a 5G new service carried in the PADI, the BNG device does not respond to the PADI.

At step 3, after receiving PADOs from various BNGs, the FN-RG device selects a respective BNG device, whose PADO is first received, as a primary BNG, and responds with a PADR packet, where the PADR packet contains and contains only one TAG with a TAG_TYPE of Service-Name, indicating the service requested by the FN-RG.

According to an implementation, the Service-Name TAG carried in the PADR data packet is of the 5G service type. In order to realize differentiated value-added services, 5G services can be subdivided into services of various slice types, and the NSSAI information of the 5G core network can be extracted.

According to an implementation, Service-Name of 5G type is recommended. In order to support 5G NSSAI, it is suggested that various types of slices can be added at the same time, such as IPTV NSSAI, HSI NSSAI, VoIP NSSAI, etc. BNG may only parse 5G Type and send various NSSAI types to FMIF-C. The Line ID information in the PPPoE message is extracted and sent to FMIF-C. For the definition of NSSAI type, there should be a subscription between FN-RG and FMIF-C, which should be consistent with the subscription information of operators in the 5G core network.

According to an implementation, after receiving the PPPoE PADR message sent by the FN-RG, the Wireline-AN node adds and encapsulates the TAG information of the local Line ID to the PPPoE message.

According to an implementation, the W-AN node has the ability to encapsulate and process PPPoE discovery messages, and the ability of carrying the TAG information of Line ID and sending to BNG.

At step 4, after BNG receives the PADR message carrying the Line ID information, BNG parses the PPPoE message to acquire the Line ID information, and at the same time, BNG encapsulates the PADR message and responds to FN-RG with the PADR, to complete the link discovery from FN-RG to BNG.

According to an implementation, after parsing the PADR message, and detecting the Service-Name TAG of 5G type, BNG will trigger the notification of user registration information to the 5G core network in a next stage.

According to an implementation, when BNG triggers the notification of user registration information to the 5G core network, the notification information may be sent to 5G FMIF-C, which is completed by the proxy 5G FMIF-C for FN-RG.

According to an implementation, a second discovery stage of PPPoE may be applied between BNG and 5G FMIF-C. The PPPoE still uses a discovery stage to complete the notification to the 5G FMIF-C, which is based on a discovery by BNG to the corresponding 5G FMIF-C.

According to an implementation, the second discovery stage of PPPoE is used for the conventional wired access network FN-RG to complete the discovery of FMIF-C, and the notification of FN-RG user registration and subscription information, through the BNG proxy, after completing the link access authentication through the conventional BNG device.

At steps 5 to 8, BNG initiates the second discovery stage of PPPoE, which is used to discover the corresponding FMIF-C, and notify the Line ID information of FN-RG to 5G FMIF-C.

At step 5, BNG initiates the PADI message and enters the second discovery stage of PPPoE.

According to an implementation, the PADI message carries a TAG with a Service-Name of 5G type.

According to an implementation, the 5G Service tag can support further refinement and various slice types.

According to an implementation, the BNG encapsulates the Line ID information of PADR from AN parsed in the first discovery stage of PPPoE, and the BNG local NAS_IP identifier, into a complete Line ID of FN-RG user identifier, and sends to 5G FMIF-C as user subscription information.

At step 6, 5G FMIF-C will parse the received PADI message and respond with PADO to the BNG.

At step 7, after receiving the PADO message with the 5G Service TAG, BNG selects FMIF-C, and at the same time, respond with a PADI unicast message.

According to an implementation, BNG can select FMIF-C according to the order of receiving PADIs, or select a corresponding 5G FMIF-C by using user local configuration strategies, such as a location selection strategy or a load sharing strategy.

At step 8, 5G FMIF-C acquires a service requirement with a Service-Name of 5G type which is sent by BNG, and parses various slice requirements of the 5G service.

According to an implementation, in order to support 5G NSSAI, PPPoE messages sent by BNG carries various slice types, such as IPTV NSSAI, HSI NSSAI, VoIP NSSAI, etc. 5G FMIF-C parses various NSSAI types, by parsing the Service-Name TAG in the PPPoE message, and sends NSSAI requirement information as NAS registration information to the AMF of the 5G core network, thus realizing the support of services of various slice types.

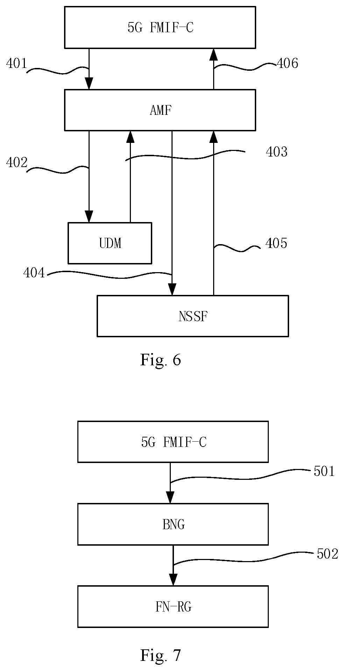

According to an implementation, for the definition of the 5G NSSAI slice type, a subscription definition is provided between FN-RG and BNG and FMIF-C. As shown in Fig. 6, the processing of the above subscription definition is shown.

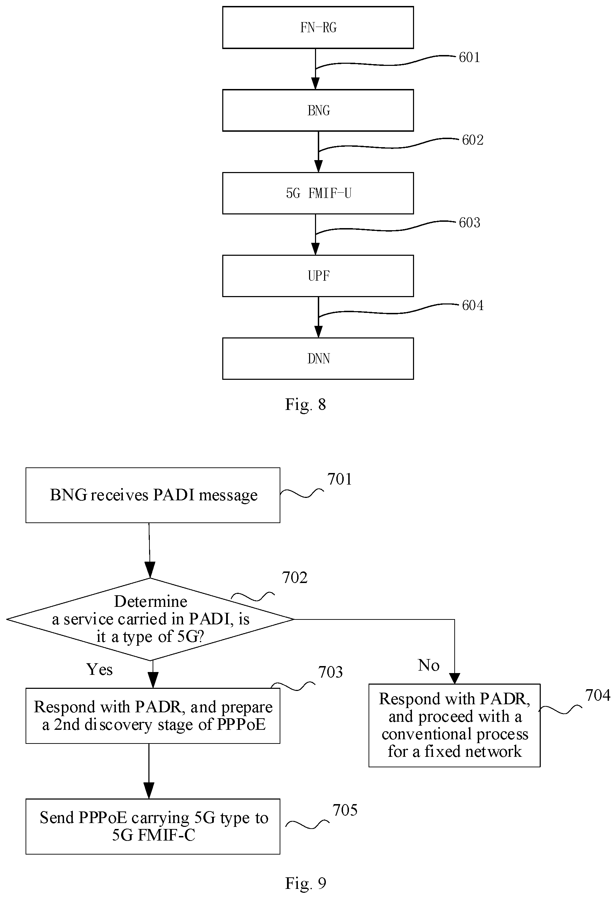

According to an implementation, the subscription definition between BNG and 5G FMIF-C is processed through 5G FMIF-U. 5G FMIF-U is the user plane of 5G FMIF-C, and the transmission of the PPPoE session message between 5G FMIF-C and 5G FMIF-U is realized through an interface. 5G FMIF-C directly interfaces with the 5G FMIF-U, as shown in Fig. 9.

For the user subscription information of FN-RG, W-AN adds the Line ID information of PPPoE, sends a user session containing the 5G new service requirement to 5G FMIF-C, and 5G FMIF-C realizes the user registration to the 5G core network.

For the subscription definition of 5G NSSAI in FN-RG, BNG and 5G FMIF-C, and the subscription definition of 5G NSSAI in FN-RG, BNG and 5G FMIF-C, a reference can be made to Table two.

5G NSSAI defines the identifier of NSSAI in 3GPP TS23.501 file, which includes two parts:
Slice/Server Type (SST), which specifies various slice types in terms of the characteristics and services of network slices.

Slice Differentiator (SD), which is optional, can be used when there are multiple slices with differentiated characteristics under the same SST.

3GPPP has formulated the standard specification for SST, see Table one. Three types of standard SST are established, including extra Maximum Broadband (eMBB), Ultra Reliable Low Latency Communication (URLLC), and Maximum Internet of Things (MIoT), and the reference values of 1,2,3 are defined for three types of network slices. For the same SST type, services with differentiated requirements in service implementation can be further refined through SD. Since FN-RG and BNG do not support NSSAI, the implementation of slicing is realized through the inter-working device 5G FMIF. In an implementation, 5G FMIF can be used to collect NS slice requirements from FN-RG, apply for network slice NS from the 5G core network, and subscribe to with 5G core network according to various types of network slices divided by FN-RG and 5G FMIF. The present disclosure provides a subscription rule setting suitable for the fixed-mobile convergence network and the service slicing of the wired access network to the 5G core network.

Conventional services of wired access network mainly include broadband services, such as IPTV, VoIP, HSI. With the addition of 5G new service types, such as uRLLC and MIoT, new requirements have been brought. Therefore, on the access side of the wired access network, when the SST type focused on is eMBB, in the differentiation processing of SD, according to the embodiment of the present disclosure, it is recommended to classify differentiated enhanced mobile broadband services as described in Table two. When SST=1, SD value is set to 1, 2 and 3, which is suitable for various types of broadband services such as HSI, IPTV and VoIP respectively.

The slicing process of a wired access network based on the fixed-mobile convergence includes the following operations:
(1) 5G FMIF-C collects the slice requirements of the wired accessed FN-RG;
(2) The NS slice subscription authentication of 5G FMIF-C to the 5G core network and the acquisition of the NS slicing strategy;
(3) 5G FMIF-C synchronizes the NS slicing strategy acquired from the 5G core network to the wired access network, in order to realize the binding of the wired access network slicing strategy and the 5G core network slicing strategy;
(4) FN-RG adds a slicing forwarding strategy of the 5G core network when forwarding various network slicing functions, to realize slicing processing of the user plane.

Fig. 5 shows the collection of NS information by 5G FMIF-C.

Fig. 6 shows the slice subscription authentication from 5G FMIF-C to the 5G core network.

Fig. 7 shows the mapping binding between the wireless core network and the wired access network of the 5G FMIF-C network slicing strategy.

Fig. 8 shows the slicing processing flow of the FN-RG user plane.

The following is a detailed explanation of the above description.

The process of collecting NS information by 5G FMIF-C, as shown in Fig. 5, includes the following operations.

At step 301, FN-RG sends PPPoE messages carrying various NS requirement identifiers to BNG.

At step 302, BNG transparently transmits the received PPPoE messages to 5G FMIF-C.

Fig. 6 shows the slice subscription authentication from 5G FMIF-C to the 5G core network, which includes the following operations.

At step 401, 5G FMIF-C sends NAS registration information which includes NSSAI information, where the NSSAI information includes SST and SD information, and sends the NAS registration information to a corresponding AMF.

At step 402, the AMF sends the NAS registration information to UDM for subscription information verification according to the NAS registration information. UDM reads the NAS registration information, parses SUPI information corresponding to a registration identifier, and reads operator subscription information of the NSSAI information.

At step 403, UDM sends the NSSAI operator subscription information to a corresponding AMF.

At step 404, the AMF requests an operator configuration strategy from NSSF according to a requirement.

At step 405, NSSF sends the operator configuration strategy to the corresponding AMF.

At step 406, the AMF responds with a user registration information of the NAS information to 5G FMIF-C.

The mapping binding processing flow between the wireless core network and the wired access network of 5G FMIF-C network slicing strategy, as shown in Fig.7, includes the following operations.

At step 501, 5G FMIF-C receives the network slice subscription information from the wireless core network, looks up a mapping table of the network slicing strategy from the wireless core network to the wired access network stored in 5G FMIF-C, maps a network slice corresponding to the SST and SD value of the wireless core network slice to the slice type which can be parsed by the wired access network, and sends to BNG.

At step 502, BNG transparently transmits the slicing strategy parsed by 5G FMIF-C to FN-RG.

The FN-RG user plane slice processing flow, as shown in Fig. 8, includes the following operations.

At step 601, FN-RG performs the user plane forwarding encapsulation processing of traffic according to an acquired slicing policy configuration requirement, and sends the traffic to BNG through a U interface.

At step 602, the BNG device transmits the user plane traffic to 5G FMIF-U through a V interface.

At step 603, the 5G FMIF-U looks up the locally stored mapping table between the wired access network slicing traffic configuration policy and the wireless core network slicing policy, maps the traffic to the wireless core network, and sends to a corresponding UPF.

At step 604, the UPF, sends the traffic to DNN through a N6 interface.

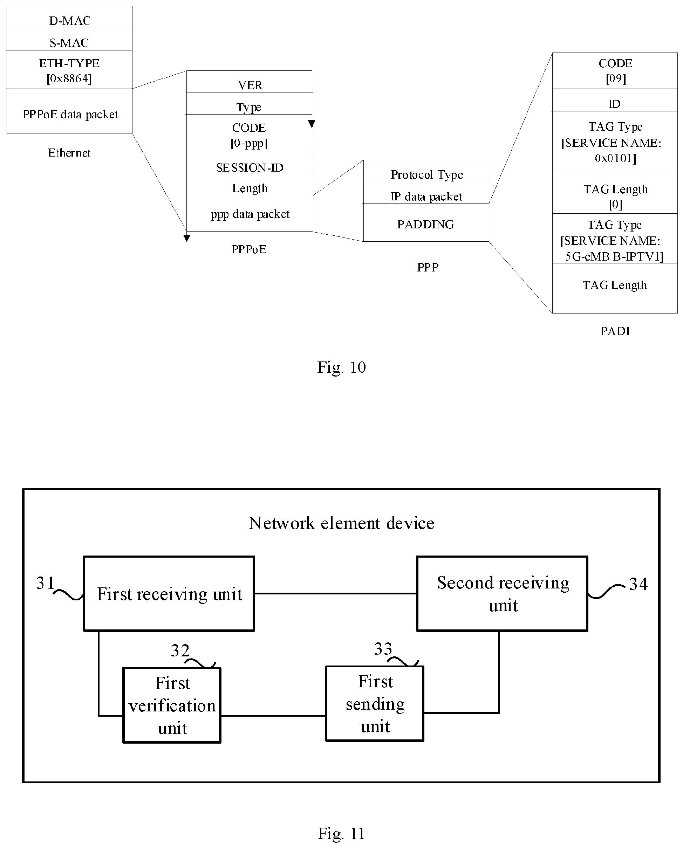

In the encapsulation process of the PPPoE message, when the present disclosure deals with the new 5G service requirements of FN-RG, the implementation of PPPoE message is extended to represent the service type. Fig. 10 shows the encapsulation implementation of PPPoE PADI message.

When PPPoE PADI message is encapsulated, FN-RG initiates PPPoE Active Discovery Initiation (PADI), a destination address of the packet is a broadcast address 0xffffffffffff of the Ethernet, a value of CODE field is 0x09, and a value of SESSION-ID field is 0x0000. PADI packet contains a tag of service name type (a tag type field value is 0x0101). At the same time, considering FN-RG sending a 5G new service requirement, the TAG support is extended and a SERVICE NAME is added as a TAG TYPE of 5G type. Furthermore, considering the requirement of NSSAI slice refinement, the TAG in FN-RG carries the types of eMBB which are required to refine 5G services, including 5G-eMBB-IPTV, 5G-eMBB-HSI and 5G-eMBB-VoIP. For IoT, the service type is set to 5G-IoT.

After receiving the PPPoE PADI message sent by FN-RG, BNG will parse the TAG of the message. If the SERVICE NAME is of 5G type, a second discovery negotiation of PPPoE is conducted, and the PPPoE PADI message is sent to the corresponding 5G FMIF-C.

After receiving the PPPoE PADI message, 5G FMIF-C parses the TAG of the message, extracts the TAG value, and converts the TAG value into the information carried in NSSAI. Refer to the standardized slicing service/type value defined by 3GPP, as shown in Table one, and the SD service differentiation processing value defined in the present disclosure, as shown in Table two, for example, SST=1 and SD=2 for IPTV service of eMBB.

In the determination processing of BNG's service request to FN-RG, after FN-RG sends out the 5G service request, the wired access network can send the 5G new service request to the 5G core network, which is completed by 5G FMIF, the inter-working device between wired access network and wireless core network. In case that the wired access network and the wireless core network are managed and operated by different operators, the BNG device of the original wired access network is reserved, and the BNG device is used to judge the type of FN-RG service request, and trigger a new negotiation to send the 5G service requirement from FN-RG to 5G FMIF. Fig. 9 shows the determination processing flow of BNG, which includes the following operations.

At step 701, BNG receives a PPPoE discovery message PADI from FN-RG.

At step 702, BNG parses the received PADI message to determine whether a Service-Name TAG in the message is of a 5G type. If yes, go to step 703, and if not, go to step 704.

At step 703, BNG responds with a PADR message to FN-RG, and prepares to initiate a second discovery stage of PPPoE.

At step 704, BNG responds with the PADR message to FN-RG and proceeds with a conventional processing for the wired access network.

At step 705, BNG encapsulates the PADI message carrying the Service-Name TAG of the 5G service requirement, and sends to 5G FMIF-C.

In the process of encapsulating user registration information of FN-RG by 5G FMIF-C, after receiving a Line ID of FN-RG, FMIF-C encapsulates N1 information, passes over to an N2 interface and transmits NAS information to AMF.

In 3GPP TR23.716, FN-RG is mapped to SUPI through the Line ID, and is then transmitted to the 5G core network by a hidden SUCI format. For the wired access of 5G-RG, the Line ID can be converted into IMSI, then encapsulated into an SUPI format, and transmitted to the 5G core network through the hidden SUCI format.

After receiving the Line ID information sent by BNG, FMIF-C adds Operator ID information to the Line ID, encapsulates it into a hidden Subscription Concerned Identifier (SUCI) format, and sends to AMF.

AMF selects a corresponding AUSF based on the received SUCI message information, and requests an authentication of the AUSF.

After receiving the SUCI information from AMF, AUSF extracts, from UDM, Subscription Permanent Identifier (SUPI) information corresponding to the SUCI information, and returns the SUPI information to AMF for authentication.

UDM extracts SUPI information based on Line ID instead of IMSI.

It should be noted that the wired network registers and authenticates a user through the Line ID, and the billing process in the wired network also identifies a user through the Line ID information of the user.

For the transmission of the user information from AMF to Session Management Function (SMF), Policy Control Function (PCF) and Short Message Service Function (SMSF), the Line ID information is implemented according to a transmission mechanism defined by the core network. AMF transmits the user registration information to SMF through an N11 interface, and transmits the user registration information to PCF, SMSF and so on through an N7 interface.

In this process, there is also a need for mapping between the Line ID information of 5G FMIF-C and SUPI or SUCI.

According to an embodiment, the Line ID information received by FMIF-C contains a user who requests a 5G service. If the inter-working device is implemented by AGF, the Line ID information received by AGF may contain a service requirement of conventional wired access network, and the Line ID will be authenticated by the AAA server attached to BNG. For a user having a 5G service requirement, AGF encapsulates the Line ID, adds Operator ID information and further encapsulate as SUPI, and sends to 5GC in a hidden SUCI format. When there is a requirement for service differentiation for AGF, a service filtering function is added, and the processing of various user service requirements are realized through the service filtering function.

To sum up, the embodiments of the present disclosure realizes how FN-RG, as a conventional residential gateway, can encapsulate the user ID when registering and authenticating a new 5G user. Through the discovery stage of PPPoE PADI, the extended PADI message supports the 5G service type. At the same time, for various types of wired access network services, considering the support of the 5G core network for network slicing, the types of wired access network access services are refined through FN-RG wired access network. Referring to the SST type provided by 3GPP, for eMBB service with SST=1, SD is extended to support the broadband value-added service type of the wired access network, thus the service slice types to the 5G core network NSSAI can be refined.

Fig. 11 is a first block diagram of a network element device according to an embodiment of the present disclosure, the network element device includes: a first receiving unit 31 configured to receive an access requirement of a user of a wired access network after establishing a session for linking with the user of the wired access network; a first verification unit 32 configured to verify the access requirement; a first sending unit 33 configured to send a wireless core network service requirement to an inter-working device of multi-network convergence, in response to a verification that the access requirement is the wireless core network service requirement; a second receiving unit 34 configured to receive a registration feedback of accessing the wireless core network, and to send the registration feedback to the user of the wired access network, where the registration feedback is fed back by the inter-working device after processing registration information carried in the wireless core network service requirement.

According to an embodiment, the access network of the wired access network and the access network of the wireless core network are managed by different operators or the same operator.

According to an embodiment, the first sending unit is further configured to: send the wireless core network service requirement to the inter-working device through a Point-to-Point Protocol over Ethernet (PPPoE) session or an Internet Protocol over Ethernet (IPoE) session.

According to an embodiment, the second receiving unit is further configured to: receive a registration feedback of accessing the wireless core network through a PPPoE session or an IPoE session, and sends the registration feedback to the user of the wired access network.

In an implementation, when the access requirement of the user of the wired access network is encapsulated by a PADI message, a service requested by the user of the wired access network carried in the PADI message is identified by a TAG type of a service name.

In an implementation, the PADI message further carries respective service slice types corresponding to various wireless core network services, and the respective service slice types are distinguished by various numerical values.

Service slice types include at least one selected from Internet Protocol Television (IPTV) type, Hyper Service Internet (HSI) type and 5G value-added service type.

According to an implementation, the PADI message further carries TAG information of a local identifier Line ID of a wired access W-AN node.

According to an embodiment, the first verification unit is further configured to: when the access requirement is encapsulated by the PADI message, if it is parsed that the TAG type corresponding to the service requested by the user of the wired access network carried in the PADI message is 5G type, return a PADR message to the user of the wired access network in order to trigger an access of the wired access network to the wireless core network.

The PADR message carries at least a same service name as that carried in the PADI message.

According to an embodiment, the first sending unit is further configured to: send the PADI message to the inter-working device, where the PADI message carries a TAG type of a 5G service requirement.

According to an embodiment, the first sending unit is further configured to: add a local Non-Access-Stratum IP (NAS_IP) identifier of the first network element device into the PADI message, and generate user subscription information of the user of the wired access network; and send the PADI message carrying the user subscription information to the inter-working device.

The inter-working device, according to an embodiment, includes: a third receiving unit configured to receive a wireless core network service requirement sent by a first network element device; a first parsing unit configured to parse registration information of a user of a wired access network linked with the first network element device, in the wireless core network service requirement, and to acquire a registration feedback according to the registration information; a second sending unit configured to send the registration feedback to the first network element device.

According to an implementation, when the wireless core network service requirement is encapsulated into a PADI message, the PADI message carries at least one selected from:
- a service requested by the user of the wired access network, which is identified by a TAG type of a service name;
- respective service slice types corresponding to various wireless core network services, where the respective service slice types are distinguished by various numerical values;
- TAG information of a local identifier Line ID of a wired access W-AN node;
- a local NAS_IP identifier of the first network element device.

According to an implementation, the service slice types include at least one selected from Internet Protocol Television (IPTV) type, Hyper Service Internet (HSI) type and 5G value-added service type.

According to an implementation, the first parsing unit is further configured to: when the inter-working device parses that the registration information is user subscription information of the PADI message, acquire a TAG type of a 5G service requirement and the corresponding service slice type carried in the PADI message according to the user subscription information; realize a user registration to the wireless core network according to the TAG type of the 5G service requirement and the corresponding service slice type, and acquire the registration feedback.

According to an implementation, the first parsing unit is further configured to: perform NS slice subscription authentication to the wireless core network according to the TAG type of the 5G service requirement and the corresponding service slice type, and acquire a NS slicing strategy; and store the NS slicing strategy locally and synchronize the NS slicing strategy to the wired access network, to realize a binding of a wired access network slicing strategy and a wireless core network slicing strategy.

According to an implementation, after the binding of the wired access network slicing strategy and the wireless core network slicing strategy is realized, the device further includes: a first binding unit configured to, according to the binding of the wired access network slicing strategy and the wireless core network slicing strategy, generate a mapping table from the wireless core network slicing strategy to the wired access network slicing strategy.

According to an implementation, after the binding of the wired access network slicing strategy and the wireless core network slicing strategy is realized, the device further includes a mapping unit configured to: receive network slice subscription information from the wireless core network; and look up the mapping table, and map slice information in the network slice subscription information to a slice type which can be parsed by the wired access network.

According to an implementation, the second sending unit is further configured to: acquire the registration feedback according to the slice information of the slice type which can be parsed by the wired access network; and send the registration feedback to the first network element device through a PADO message.

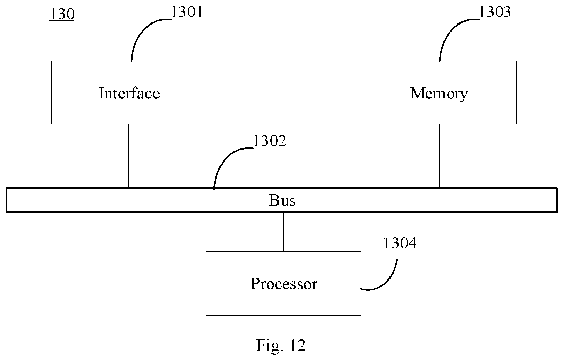

Fig. 12 is a first schematic diagram of a hardware structure of the network element device according to an embodiment of the present disclosure. As shown in Fig. 12, the network element device 130 includes: a memory 1303 and a processor 1304. The network element device 130 may also include an interface 1301 and a bus 1302. The interface 1301, memory 1303 and processor 1304 are connected by the bus 1302. The memory 1303 is configured to store instructions. The processor 1304 is configured to read the instructions to execute the technical scheme of the above method embodiments applied to the network element device, and the principle of implementation and technical effect are similar to that of the method embodiments, which will not be repeated here.

What has been described above are only several embodiments of the present disclosure, and are not intended to limit the scope of protection of the present disclosure.

Those having ordinary skills in the art should understand that the term user terminal covers any suitable types of wireless user equipment, such as mobile phones, portable data processing devices, portable web browsers or vehicle-mounted mobile stations.

Generally speaking, various embodiments of the present disclosure can be implemented in hardware or dedicated circuits, software, logic or any combination thereof. For example, some embodiments can be implemented in hardware, while other embodiments can be implemented in firmware or software that can be executed by a controller, microprocessor or other computing device, although the present disclosure is not limited thereto.

Embodiments of the present disclosure can be realized by a data processor of a mobile device executing computer program instructions, for example, in a processor entity; or by hardware; or by a combination of software and hardware. Computer program instructions can be assembly instructions, instruction set architecture (ISA) instructions, machine instructions, machine-related instructions, microcode, firmware instructions. state setting data, or source code or object code written in any combination of one or more programming languages.

The block diagrams of any logic flow in the drawings of the present disclosure can represent program steps, or can represent interconnected logic circuits, modules and functions, or can represent the combination of program steps and logic circuits, modules and functions. The computer programs can be stored in the memory. The memory can be of any type suitable for the local technical environment and can be implemented by using any suitable data storage technology. It can be understood that the memory in the embodiments of the present disclosure may be a volatile memory or a nonvolatile memory or may include both volatile and nonvolatile memories. The nonvolatile memory may be a read-only memory (ROM), a programmable ROM (PROM), an erasable PROM (EPROM), an electrically EPROM (EEPROM) or a flash memory. The volatile memory may be a random-access memory (RAM), which is used as an external cache. By way of example but not limitation, many forms of RAM may be used, such as a static RAM (SRAM), a dynamic RAM (DRAM), synchronous DRAM (SDRAM), a double data rate SDRAM (DDRSDRAM), an enhanced SDRAM (ESDRAM), a synchlink DRAM (SLDRAM) and a direct Rambus RAM (DRRAM). The memory described in the systems and methods of the present disclosure is intended to include, but is not limited to, these and any other suitable types of memory.

The processors according to the embodiments of the present disclosure can be any type suitable for the local technical environment, such as but not limited to general-purpose computer, special-purpose computer, microprocessor, Digital Signal Processor (DSP), application specific integrated circuit (ASIC), Field-Programmable Gate Array (FGPA) or other programmable logic devices, discrete gates or transistor logic devices, discrete hardware components, or processors based on a multi-core processor architecture. The general-purpose processor may be a microprocessor or the processor may be any conventional processor. The steps of the disclosed methods in the embodiments of the present disclosure can be implemented or executed by the above processor. The software modules can be located in a well known storage medium in the art such as a random access memory, a flash memory, a read-only memory, a programmable read-only memory or electrically erasable programmable memory, a register, etc. The storage medium is located in the memory, and the processor reads the information in the memory and performs the steps of the above method in combination with the hardware thereof.

### Industrial Applicability

As described above, the method, the network element device and the computer-readable storage medium for realizing the registration of 5G users provided by the embodiments of the present disclosure have the following beneficial effects: the 5G user registration can be realized based on the conventional residential gateway FN-RG, and the communication with the wireless core network can be completed.

## Claims

1. A method for implementing 5G user registration performed by a first network element device which is a Broadband Network Gateway, BNG, and realizes wired access and convergence to the wireless core network, the method comprising:
establishing, by the first network element device, a session to link with a user of a wired access network, and receiving an access requirement of the user of the wired access network (101);
verifying, by the first network element device, the access requirement (102);
in response to a verification that the access requirement is a wireless core network service requirement, sending, by the first network element device, the wireless core network service requirement to an inter-working device of multi-network convergence (103); and
receiving, by the first network element device, a registration feedback of accessing the wireless core network, and sending the registration feedback to the user of the wired access network, wherein the registration feedback is fed back after processing registration information carried in the wireless core network service requirement by the inter-working device (104).

2. The method of claim 1, wherein an access network of the wired access network and an access network of the wireless core network are managed by different operators or a same operator.

3. The method of claim 1, wherein, in response to a verification that the access requirement is a wireless core network service requirement, sending, by the first network element device, the wireless core network service requirement to an inter-working device of multi-network convergence, comprises:
sending the wireless core network service requirement to the inter-working device through a Point-to-Point Protocol over Ethernet, PPPoE, session or an Internet Protocol over Ethernet, IPoE, session.

4. The method of claim 1, wherein, receiving, by the first network element device, a registration feedback of accessing the wireless core network, and sending the registration feedback to the user of the wired access network, comprises:
receiving, by the first network element device, the registration feedback of accessing the wireless core network through a PPPoE session or an IPoE session, and sending the registration feedback to the user of the wired access network.

5. The method of claim 1, wherein, when the access requirement of the user of the wired access network is encapsulated by a PADI message, a service requested by the user of the wired access network carried in the PADI message is identified through a TAG type of a service name.

6. The method of claim 5, wherein, the PADI message further carries TAG information of a local identifier Line ID of a wired access W-AN node.

7. The method of claim 5, wherein, verifying, by the first network element device, the access requirement, comprises:
when the access requirement is encapsulated by the PADI message, in response to the TAG type corresponding to the service requested by the user of the wired access network carried in the PADI message being parsed to be 5G type, returning a PPPoE Active Discovery Request, PADR, message to the user of the wired access network in order to trigger an access of the wired access network to the wireless core network; and
the PADR message carrying at least a same service name as that carried in the PADI message.

8. The method of claim 7, wherein, in response to a verification that the access requirement is a wireless core network service requirement, sending, by the first network element device, the wireless core network service requirement to an inter-working device of multi-network convergence, comprises:
sending, by the first network element device, the PADI message to the inter-working device; and
the PADI message carrying a TAG type of a 5G service requirement.

9. The method of claim 8, wherein, sending, by the first network element device, the PADI message to the inter-working device, comprises:
adding a local Non-Access-Stratum IP, NAS_IP, identifier of the first network element device into the PADI message, and generating user subscription information of the user of the wired access network; and
sending the PADI message carrying the user subscription information to the inter-working device.

10. A method for implementing 5G user registration performed by an inter-working device which realizes multi-network convergence, the method comprising:
receiving, by the inter-working device, a wireless core network service requirement sent by a first network element device which is a Broadband Network Gateway, BNG (201);
parsing, by the inter-working device, registration information of a user of a wired access network linked with the first network element device, in the wireless core network service requirement, and acquiring a registration feedback according to the registration information (202); and
sending, by the inter-working device, the registration feedback to the first network element device (203).

11. The method of claim 10, wherein, when the wireless core network service requirement received by the inter-working device is encapsulated by a PADI message, the PADI message carries at least one of:
a service requested by the user of the wired access network, which is identified by a TAG type of a service name;
service slice types corresponding to various wireless core network services, wherein the service slice types are distinguished by various numerical values;
TAG information of a local identifier Line ID of a wired access W-AN node; or
a local NAS_IP identifier of the first network element device.

12. The method of claim 11, wherein, parsing, by the inter-working device, registration information of a user of a wired access network linked with the first network element device, in the wireless core network service requirement, and acquiring a registration feedback according to the registration information, comprises:
in response to the inter-working device parses that the registration information being user subscription information of the PADI message, acquiring, by the inter-working device, a TAG type of a 5G service requirement and the corresponding service slice type carried in the PADI message according to the user subscription information; and
realizing, by the inter-working device, a user registration to the wireless core network according to the TAG type of the 5G service requirement and the corresponding service slice type, and acquiring the registration feedback.

13. The method of claim 12, wherein, realizing, by the inter-working device, a user registration to the 5G core network according to the TAG type of the 5G service requirement and the corresponding service slice type, and acquiring the registration feedback, comprises:
performing, by the inter-working device, NS slice subscription authentication to the wireless core network according to the TAG type of the 5G service requirement and the corresponding service slice type, and acquiring a NS slicing strategy; and
storing, by the inter-working device, the NS slicing strategy locally, and synchronizing the NS slicing strategy to the wired access network, to realize a binding of a wired access network slicing strategy and a wireless core network slicing strategy.

14. The method of claim 13, wherein, after the binding of the wired access network slicing strategy and the wireless core network slicing strategy is realized, the method further comprises:
according to the binding of the wired access network slicing strategy and the wireless core network slicing strategy, generating a mapping table from the wireless core network slicing strategy to the wired access network slicing strategy.

15. A computer-readable storage medium storing a computer program which, when executed by a processor, causes the processor to perform the method of any one of claims 1 to 14.

## Patentansprüche

1. Verfahren zum Implementieren einer 5G-Benutzerregistrierung, die von einer ersten Netzelementvorrichtung durchgeführt wird, die ein Breitbandnetz-Gateway, BNG, ist und einen drahtgebundenen Zugang und Konvergenz mit dem drahtlosen Kernnetz realisiert, das Verfahren umfassend:
Aufbauen, durch die erste Netzelementvorrichtung, einer Sitzung zur Verbindung mit einem Benutzer eines drahtgebundenen Zugangsnetzes und Empfangen einer Zugangsanforderung des Benutzers des drahtgebundenen Zugangsnetzes (101);
Überprüfen, durch die erste Netzelementvorrichtung, der Zugangsanforderung (102);
als Reaktion auf eine Überprüfung, dass die Zugangsanforderung eine drahtlose Kernnetzdienstanforderung ist, Senden, durch die erste Netzelementvorrichtung, der drahtlosen Kernnetzdienstanforderung an eine zwischengeschaltete Vorrichtung für Multinetzkonvergenz (103); und
Empfangen, durch die erste Netzelementvorrichtung, einer Registrierungsrückmeldung eines Zugangs zu dem drahtlosen Kernnetz und Senden der Registrierungsrückmeldung an den Benutzer des drahtgebundenen Zugangsnetzes, wobei die Registrierungsrückmeldung nach Verarbeiten von Registrierungsinformationen, die in der drahtlosen Kernnetzdienstanforderung durch die zwischengeschaltete Vorrichtung (104) übermittelt werden, zurückgesendet wird.

2. Verfahren nach Anspruch 1, wobei ein Zugangsnetz des drahtgebundenen Zugangsnetzes und ein Zugangsnetz des drahtlosen Kernnetzes von verschiedenen Betreibern oder von demselben Betreiber verwaltet werden.

3. Verfahren nach Anspruch 1, wobei als Reaktion auf eine Überprüfung, dass die Zugangsanforderung eine drahtlose Kernnetzdienstanforderung ist, ein Senden, durch die erste Netzelementvorrichtung, der drahtlosen Kernnetzdienstanforderung an eine zwischengeschaltete Vorrichtung für Multinetzkonvergenz Folgendes umfasst:
Senden der drahtlosen Kernnetzdienstanforderung an die zwischengeschaltete Vorrichtung über eine Sitzung Point-to-Point Protocol over Ethernet, PPPoE, oder eine Sitzung Internet Protocol over Ethernet, IPoE.

4. Verfahren nach Anspruch 1, wobei ein Empfangen, durch die erste Netzelementvorrichtung, einer Registrierungsrückmeldung eines Zugangs zu dem drahtlosen Kernnetz und ein Senden der Registrierungsrückmeldung an den Benutzer des drahtgebundenen Zugangsnetzes Folgendes umfasst:
Empfangen, durch die erste Netzelementvorrichtung, der Registrierungsrückmeldung eines Zugangs zu dem drahtlosen Kernnetz über eine PPPoE-Sitzung oder eine IPoE-Sitzung und Senden der Registrierungsrückmeldung an den Benutzer des drahtgebundenen Zugangsnetzes.

5. Verfahren nach Anspruch 1, wobei, wenn die Zugangsanforderung des Benutzers des drahtgebundenen Zugangsnetzes durch eine PADI-Nachricht eingekapselt wird, ein von dem Benutzer des drahtgebundenen Zugangsnetzes angeforderter Dienst, der in der PADI-Nachricht übermittelt wird, durch einen TAG-Typ eines Dienstnamens identifiziert wird.

6. Verfahren nach Anspruch 5, wobei die PADI-Nachricht ferner TAG-Informationen einer lokalen Kennung Line ID eines W-AN-Knotens mit drahtgebundenem Zugang übermittelt.

7. Verfahren nach Anspruch 5, wobei ein Überprüfen, durch die erste Netzelementvorrichtung, der Zugangsanforderung Folgendes umfasst:
wenn die Zugangsanforderung durch die PADI-Nachricht eingekapselt ist, als Reaktion darauf, dass der TAG-Typ, der dem von dem Benutzer des drahtgebundenen Zugangsnetzes angeforderten Dienst entspricht, der in der PADI-Nachricht übermittelt wird, als 5G-Typ geparst wird, Zurückgeben einer Nachricht PPPoE Active Discovery Request, PADR, an den Benutzer des drahtgebundenen Zugangsnetzes, um einen Zugang des drahtgebundenen Zugangsnetzes zu dem drahtlosen Kernnetz auszulösen; und
wobei die PADR-Nachricht mindestens denselben Dienstnamen wie jenen übermittelt, der in der PADI-Nachricht übermittelt wird.

8. Verfahren nach Anspruch 7, wobei als Reaktion auf eine Überprüfung, dass die Zugangsanforderung eine drahtlose Kernnetzdienstanforderung ist, ein Senden, durch die erste Netzelementvorrichtung, der drahtlosen Kernnetzdienstanforderung an eine zwischengeschaltete Vorrichtung für Multinetzkonvergenz Folgendes umfasst:
Senden, durch die erste Netzelementvorrichtung, der PADI-Nachricht an die zwischengeschaltete Vorrichtung; und
wobei die PADI-Nachricht einen TAG-Typ für eine 5G-Dienstanforderung übermittelt.

9. Verfahren nach Anspruch 8, wobei ein Senden, durch die erste Netzelementvorrichtung, der PADI-Nachricht an die zwischengeschaltete Vorrichtung Folgendes umfasst:
Hinzufügen einer lokalen Kennung für Non-Access-Stratum-IP, NAS_IP, der ersten Netzelementvorrichtung zu der PADI-Nachricht und Erzeugen von Benutzerabonnementinformationen des Benutzers des drahtgebundenen Zugangsnetzes; und
Senden der PADI-Nachricht mit den Benutzerabonnementinformationen an die zwischengeschaltete Vorrichtung.

10. Verfahren zum Implementieren einer 5G-Benutzerregistrierung, die durch eine zwischengeschaltete Vorrichtung durchgeführt wird, die eine Multinetzkonvergenz realisiert, das Verfahren umfassend:
Empfangen, durch die zwischengeschaltete Vorrichtung, einer drahtlosen Kernnetzdienstanforderung, die durch eine erste Netzelementvorrichtung gesendet wird, die ein Breitbandnetz-Gateway, BNG, (201) ist;
Parsen, durch die zwischengeschaltete Vorrichtung, von Registrierungsinformationen eines Benutzers eines drahtgebundenen Zugangsnetzes, das mit der ersten Netzelementvorrichtung verbunden ist, in der drahtlosen Kernnetzdienstanforderung und Erfassen einer Registrierungsrückmeldung gemäß den Registrierungsinformationen (202); und
Senden, durch die zwischengeschaltete Vorrichtung, der Registrierungsrückmeldung an die erste Netzelementvorrichtung (203).

11. Verfahren nach Anspruch 10, wobei, wenn die drahtlose Kernnetzdienstanforderung, die durch die zwischengeschalteten Vorrichtung empfangen wird, durch eine PADI-Nachricht eingekapselt ist, die PADI-Nachricht mindestens eines von Folgenden übermittelt:
einen Dienst, der durch den Benutzer des drahtgebundenen Zugangsnetzes angefordert wird, der durch einen TAG-Typ eines Dienstnamens identifiziert wird;
Dienstschicht-Typen, die verschiedenen drahtlosen Kernnetzdiensten entsprechen, wobei die Dienstschicht-Typen durch verschiedene numerische Werte unterschieden werden;
TAG-Informationen einer lokalen Kennung Line ID eines drahtgebundenen W-AN-Knotens oder einer lokalen NAS_IP-Kennung der ersten Netzelementvorrichtung.

12. Verfahren nach Anspruch 11, wobei ein Parsen, durch die zwischengeschaltete Vorrichtung, von Registrierungsinformationen eines Benutzers eines drahtgebundenen Zugangsnetzes, das mit der ersten Netzelementvorrichtung verbunden ist, in der drahtlosen Kernnetzdienstanforderung und ein Erfassen einer Registrierungsrückmeldung gemäß den Registrierungsinformationen Folgendes umfasst:
als Reaktion darauf, dass die zwischengeschaltete Vorrichtung parst, dass die Registrierungsinformationen Benutzerabonnementinformationen der PADI-Nachricht sind, Erfassen, durch die zwischengeschaltete Vorrichtung, eines TAG-Typs einer 5G-Dienstanforderung und des entsprechenden Dienstschicht-Typs, der in der PADI-Nachricht übermittelt wird, gemäß den Benutzerabonnementinformationen; und
Durchführen, durch die zwischengeschaltete Vorrichtung, einer Benutzerregistrierung an das drahtlose Kernnetz gemäß dem TAG-Typ der 5G-Dienstanforderung und dem entsprechenden Dienstschicht-Typ, und Erfassen der Registrierungsrückmeldung.

13. Verfahren nach Anspruch 12, wobei ein Durchführen, durch die zwischengeschaltete Vorrichtung, einer Benutzerregistrierung an das 5G-Kernnetz gemäß dem TAG-Typ der 5G-Dienstanforderung und dem entsprechenden Dienstschicht-Typ, und ein Erfassen der Registrierungsrückmeldung Folgendes umfasst:
Durchführen, durch die zwischengeschaltete Vorrichtung, einer NS-Schicht-Abonnementauthentifizierung an das drahtlose Kernnetz gemäß dem TAG-Typ der 5G-Dienstanforderung und dem entsprechenden Dienstschicht-Typ, und Erfassen einer NS-Schichtbildungs-Strategie; und
Speichern, durch die zwischengeschaltete Vorrichtung, der NS-Schichtbildungs-Strategie lokal und Synchronisieren der NS-Schichtbildungs-Strategie mit dem drahtgebundenen Zugangsnetz, um eine Bindung einer Schichtbildungs-Strategie des drahtgebundenen Zugangsnetzes und einer Schichtbildungs-Strategie des drahtlosen Kernnetzes zu realisieren.

14. Verfahren nach Anspruch 13, wobei das Verfahren, nachdem das Binden der Schichtbildungs-Strategie des drahtgebundenen Zugangsnetzes und der Schichtbildungs-Strategie des drahtlosen Kernnetzes realisiert wurde, ferner Folgendes umfasst:
gemäß der Bindung der Schichtbildungs-Strategie des drahtgebundenen Zugangsnetzes und der Schichtbildungs-Strategie des drahtlosen Kernnetzes, Erzeugen einer Zuordnungstabelle von der Schichtbildungs-Strategie des drahtlosen Kernnetzes zur Schichtbildungs-Strategie des drahtgebundenen Zugangsnetzes.

15. Computerlesbares Speichermedium, das ein Computerprogramm speichert, das, wenn es von einem Prozessor ausgeführt wird, den Prozessor veranlasst, das Verfahren nach einem der Ansprüche 1 bis 14 durchzuführen.

## Revendications

1. Procédé de mise en œuvre de l'enregistrement d'utilisateurs de la 5G effectué par un premier dispositif élément de réseau qui est une passerelle de réseau à large bande (BNG) et qui fournit l'accès filaire et la convergence vers le réseau central sans fil, le procédé comprenant :
l'établissement, par le premier dispositif élément de réseau, d'une session permettant de se connecter à un utilisateur d'un réseau d'accès filaire, et la réception d'une condition d'accès de l'utilisateur du réseau d'accès filaire (101) ;
la vérification, par le premier dispositif élément de réseau filaire, de la condition d'accès (102) ;
en réponse à une vérification indiquant que la condition d'accès est une exigence de service du réseau central sans fil, l'envoi, par le premier dispositif élément de réseau, de l'exigence de service du réseau central sans fil à un dispositif d'interfonctionnement de convergence multi-réseaux (103) ; et
la réception, par le premier dispositif élément de réseau, d'une rétroaction d'enregistrement d'accès au réseau central sans fil, et l'envoi de la rétroaction d'enregistrement à l'utilisateur du réseau d'accès filaire, dans lequel la rétroaction d'enregistrement est renvoyée après traitement des informations d'enregistrement transportées dans l'exigence de service du réseau central sans fil par le dispositif d'interfonctionnement (104).

2. Procédé selon la revendication 1, dans lequel un réseau d'accès du réseau d'accès filaire et un réseau d'accès du réseau central sans fil sont gérés par des opérateurs différents ou par un même opérateur.

3. Procédé selon la revendication 1, dans lequel, en réponse à une vérification indiquant que la condition d'accès est une exigence de service du réseau central sans fil, l'envoi, par le premier dispositif élément de réseau, de l'exigence de service du réseau central sans fil à un dispositif d'interfonctionnement de convergence multi-réseaux, comprend :
l'envoi de l'exigence de service du réseau central sans fil au dispositif d'interfonctionnement au moyen d'une session du protocole d'encapsulation de PPP sur Ethernet, PPPoE, (Point-to-Point Protocol over Ethernet) ou IPoE (Internet Protocol over Ethernet).

4. Procédé selon la revendication 1, dans lequel la réception, par le premier dispositif élément de réseau, d'une rétroaction d'enregistrement d'accès au réseau central sans fil, et l'envoi de la rétroaction d'enregistrement à l'utilisateur du réseau d'accès filaire, comprennent :
la réception, par le premier dispositif élément de réseau, de la rétroaction d'enregistrement de l'accès au réseau central sans fil via une session PPPoE ou une session IPoE, et l'envoi de la rétroaction d'enregistrement à l'utilisateur du réseau d'accès filaire.

5. Procédé selon la revendication 1, dans lequel, lorsque la condition d'accès de l'utilisateur du réseau d'accès filaire est encapsulée par un message PADI, un service requis par l'utilisateur du réseau d'accès filaire transporté dans le message PADI est identifié par un type de TAG d'un nom de service.

6. Procédé selon la revendication 5, dans lequel, le message PADI transporte en outre des informations TAG d'un identifiant local Line ID d'un nœud W-AN d'accès filaire.

7. Procédé selon la revendication 5, dans lequel, la vérification, par le premier dispositif élément de réseau, de la condition d'accès comprend :
lorsque la condition d'accès est encapsulée dans le message PADI, en réponse au type de TAG correspondant au service requis par l'utilisateur du réseau d'accès filaire transporté dans le message PADI en cours d'analyse comme étant de type 5G, renvoyer un message PPPoE Active Discovery Request (PADR) à l'utilisateur du réseau d'accès filaire afin de déclencher un accès du réseau d'accès filaire au réseau central sans fil ; et
le message PADR transportant au moins un nom de service identique à celui transporté dans le message PADI.

8. Procédé selon la revendication 7, dans lequel, en réponse à une vérification indiquant que la condition d'accès est une exigence de service du réseau central sans fil, l'envoi, par le premier dispositif élément de réseau, de l'exigence de service du réseau central sans fil à un dispositif d'interfonctionnement de convergence multi-réseaux, comprend :
l'envoi, par le premier dispositif élément de réseau, du message PADI au dispositif d'interfonctionnement ; et
le message PADI transportant un type de TAG d'une exigence de service 5G.

9. Procédé selon la revendication 8, dans lequel, l'envoi, par le premier dispositif élément de réseau, du message PADI au dispositif d'interfonctionnement, comprend :
l'ajout d'une adresse IP locale de la strate de non accès, NAS_IP, identifiant du premier dispositif élément réseau dans le message PADI, et la génération d'informations d'abonnement utilisateur de l'utilisateur du réseau d'accès filaire ; et
l'envoi du message PADI contenant les informations d'abonnement utilisateur au dispositif d'interfonctionnement.

10. Procédé de mise en œuvre de l'enregistrement d'utilisateurs de la 5G effectué par un dispositif d'interfonctionnement qui réalise la convergence multi-réseaux, le procédé comprenant :
la réception, par le dispositif d'interfonctionnement, d'une exigence de service du réseau central sans fil envoyée par un premier dispositif élément de réseau qui est une passerelle de réseau à large bande, BNG (201) ;
l'analyse, par le dispositif d'interfonctionnement, des informations d'enregistrement d'un utilisateur d'un réseau d'accès filaire connecté au premier dispositif élément de réseau, dans l'exigence de service du réseau central sans fil, et l'acquisition d'une rétroaction d'enregistrement en fonction des informations d'enregistrement (202) ; et
l'envoi, par le dispositif d'interfonctionnement, de la rétroaction d'informations d'enregistrement au premier dispositif élément de réseau (203).

11. Procédé selon la revendication 10, dans lequel, lorsque l'exigence de service du réseau central sans fil reçue par le dispositif d'interfonctionnement est encapsulée par un message PADI, le message PADI transporte au moins l'un des éléments suivants :
un service requis par l'utilisateur du réseau d'accès filaire, qui est identifié par un type de TAG d'un nom de service ;
des types de tranches de service correspondant à divers services du réseau central sans fil, dans lequel les types de tranches de service sont distingués par diverses valeurs numériques ;
des informations TAG d'un identifiant local Line ID d'un nœud W-AN d'accès filaire ; ou
un identifiant NAS_IP local du premier dispositif élément réseau.

12. Procédé selon la revendication 11, dans lequel, l'analyse, par le dispositif d'interfonctionnement, des informations d'enregistrement d'un utilisateur d'un réseau d'accès filaire connecté au premier dispositif élément de réseau, dans l'exigence de service du réseau central sans fil, et l'acquisition d'une rétroaction d'enregistrement en fonction des informations d'enregistrement comprennent :
en réponse à l'analyse par le dispositif d'interfonctionnement indiquant que les informations d'enregistrement sont des informations d'abonnement utilisateur du message PADI, l'acquisition, par le dispositif d'interfonctionnement, d'un type de TAG d'une exigence de service 5G et du type de tranche de service correspondant transporté dans le message PADI en fonction des informations d'abonnement utilisateur ; et
la réalisation, par le dispositif d'interfonctionnement, d'un enregistrement d'utilisateur sur le réseau central sans fil en fonction du type de TAG de l'exigence de service 5G et du type de tranche de service correspondant, et l'acquisition de la rétroaction d'enregistrement.

13. Procédé selon la revendication 12, dans lequel, la réalisation, par le dispositif d'interfonctionnement, d'un enregistrement d'utilisateur sur le réseau central 5G en fonction du type de TAG de l'exigence de service 5G et du type de tranche de service correspondant, et l'acquisition de la rétroaction d'enregistrement comprennent :
l'exécution, par le dispositif d'interfonctionnement, de l'authentification d'abonnement à la tranche NS au réseau central sans fil en fonction du type de TAG de l'exigence de service 5G et du type de tranche de service correspondant, et l'acquisition d'une stratégie de découpage NS ; et
le stockage, par le dispositif d'interfonctionnement, de la stratégie de découpage NS localement, et la synchronisation de la stratégie de découpage NS avec le réseau d'accès filaire, afin de réaliser une liaison entre une stratégie de découpage du réseau d'accès filaire et une stratégie de découpage du réseau central sans fil.

14. Procédé selon la revendication 13, dans lequel, après la réalisation de la liaison entre la stratégie de découpage du réseau d'accès filaire et la stratégie de découpage du réseau central sans fil, le procédé comprend en outre :
en fonction de la liaison entre la stratégie de découpage du réseau d'accès filaire et la stratégie de découpage du réseau central sans fil, la génération d'une table de correspondance entre la stratégie de découpage du réseau central sans fil et la stratégie de découpage du réseau d'accès filaire.

15. Support de stockage lisible par ordinateur stockant un programme informatique qui, lorsqu'il est exécuté par un processeur, amène le processeur à exécuter le procédé selon l'une quelconque des revendications 1 à 14.
